**Europäisches Patentamt**

**European Patent Office**

**Office européen des brevets**

(19)

(11) Publication number : **0 517 257 B1**

(12) # EUROPEAN PATENT SPECIFICATION

(45) Date of publication of patent specification :
06.04.94 Bulletin 94/14

(51) Int. Cl.[5] : **B01J 20/26, F02M 25/08**

(21) Application number : **92109565.9**

(22) Date of filing : **05.06.92**

(54) **Fuel absorbent.**

(30) Priority : **07.06.91 JP 163700/91**

(43) Date of publication of application :
**09.12.92 Bulletin 92/50**

(45) Publication of the grant of the patent :
**06.04.94 Bulletin 94/14**

(84) Designated Contracting States :
**DE FR GB**

(56) References cited :
**EP-A- 0 077 628
DE-A- 3 409 414
US-A- 3 686 827
US-A- 4 381 929
US-A- 4 684 382
PATENT ABSTRACTS OF JAPAN vol. 12, no. 15 (C-469)22 January 1986
PATENT ABSTRACTS OF JAPAN vol. 09, no. 192 (C-296)13 September 1985**

(73) Proprietor : **TOYODA GOSEI CO., LTD.**
**1, Nagahata, Ochiai, Haruhi-cho**
**Nishikasugai-gun Aichi, 452 (JP)**

(72) Inventor : **Ito, Hiroshi, c/o Toyoda Gosei Technical Center**
**30, Nishinomachi, Kitajima-cho**
**Inazawa-shi, Aichi-ken, 492 (JP)**
Inventor : **Hasegawa, Shinji, c/o Toyoda Gosei Technical Cent.**
**30, Nishinomachi, Kitajima-cho**
**Inazawa-shi, Aichi-ken, 492 (JP)**
Inventor : **Sasaki, Koji, c/o Toyoda Gosei Technical Center**
**30, Nishinomachi, Kitajima-cho**
**Inazawa-shi, Aichi-ken, 492 (JP)**
Inventor : **Ohta, Takashi, c/o Toyoda Gosei Technical Center**
**30, Nishinomachi, Kitajima-cho**
**Inazawa-shi, Aichi-ken, 492 (JP)**
Inventor : **Sato, Norio, c/o Toyoda Gosei Technical Center**
**30, Nishinomachi, Kitajima-cho**
**Inazawa-shi, Aichi-ken, 492 (JP)**
Inventor : **Okada, Akane, c/o Toyoda Gosei Technical Center**
**30, Nishinomachi, Kitajima-cho**
**Inazawa-shi, Aichi-ken, 492 (JP)**

(74) Representative : **Blumbach Weser Bergen Kramer Zwirner Hoffmann Patentanwälte**
**Radeckestrasse 43**
**D-81245 München (DE)**

EP 0 517 257 B1

## Description

The present invention relates to a fuel absorbent to be used in evaporation loss control devices.

A fairly large amount of fuel evaporates when it is supplied to an automobile fuel tank through a fuel pump nozzle. Part of the fuel in the fuel tank and the carburetor float chamber also evaporates while the automobile is running or at rest.

In order to prevent the leakage of the evaporated fuel into the atmosphere, a canister (evaporation loss control device) filled with a fuel absorbent is attached to, e.g., the fuel tank. The absorbent in the canister serves to trap the evaporated fuel. Similar devices have been employed to trap fuel evaporating or leaking from fuel storage tanks other than those installed on automobiles. In such evaporation loss control devices, charcoal has been used widely as a fuel absorbent.

Fuel absorbed by charcoal can be desorbed therefrom at the time when the devices are subjected to purging. Charcoal can be used repeatedly with repeated absorption and desorption of fuel. However, canisters employing charcoal become less efficient over time to the point where the untrapped fuel vapor is released into the atmosphere at undesirable levels.

Applicants have found that the working capacity of charcoal (i.e., the capability of charcoal to trap gasoline vapor) decreases significantly when it is in contact with liquid gasoline. It has also been found that such a contact between charcoal and liquid gasoline occurs when liquid gasoline condensed on the inner surfaces of the piping around the canister or on the charcoal-free space at the top of the canister comes into contact with the charcoal.

It has been proposed to use organic polymers, e.g., polypropylenes, styrene-butadiene copolymers, to replace the traditional charcoal system (see Japanese Patent Application Laid Open Nos. 67,222/1989 and 227,861/1989). The fuel-absorbing ability of such an absorbent decreases when the absorption and desorption of fuel (or absorption-desorption cycle) is repeated.

This is presumably because the strength of primary particles and the bonding force between primary particles (or strength of secondary particles) are low, and hence primary particles are destroyed and secondary particles are disintegrated when they are repeatedly subjected, e.g., to swelling during absorption and shrinking during desorption, or to vibration. Such destruction and disintegration lead to a lowering in its absorption capability due to the generation of fine particles, which easily scatter and cause an uneven distribution of the absorbent. The primary particle has its grain size ranging from 0.1 to 300 $\mu$m. The secondary particle is an aggregate of the above primary particles with the grain size ranging from 0.1 to 10 mm.

It has been proposed to use lipophilic polymer gel as a fuel absorbent (see Publication of Japanese Patent Application Laid Open No. 67,222/1989), in which the fuel absorbent is obtained by dissolving a polymer in a large amount of solvent to be crosslinked therein, and then drying the resulting polymer solvent. For the above obtained fuel absorbent, however it is difficult to shape such a compound into a desired, predetermined form such as a fibre or a film because the crosslinked reactant contains the solvent. In shaping the fuel absorbent, a substantial degree of shrinkage occurs in drying the crosslinked reactants after reaction. This shrinkage prevents such polymers from being useful as they can not be easily shaped into a fiber or a film.

It is also well-known to use a polynorbornene, uncrosslinked thermoplastic polymer, as a fuel absorbent. Although the thermoplastic polymer has good moldability, it will swell after fuel absorption to cause restriction or deformation in the flow characteristics. This leads to insufficient desorption of the fuel from the absorbent when purging. Since the polymer dissolves in the fuel, it adheres to peripheral parts such as a canister piping and check valve, or even causes them to be clogged, resulting in deteriorated durability and sustained efficiency during repeated absorption-desorption cycles.

It is an object of the present invention to provide a fuel absorbent which can be easily shaped into a desired form, such as a fiber or film, and efficiently traps evaporated fuel while being durable to repeated absorption-desorption cycles.

The present invention provides a fuel absorbent which is a polymer crosslinked in the absence of a solvent, with a toluene swelling rate of 500 wt% and higher, and a toluene insoluble rate of 70 wt% and higher.

Other features and advantages of the present invention will be apparent from the following description, the accompanying drawing and non-limiting examples.

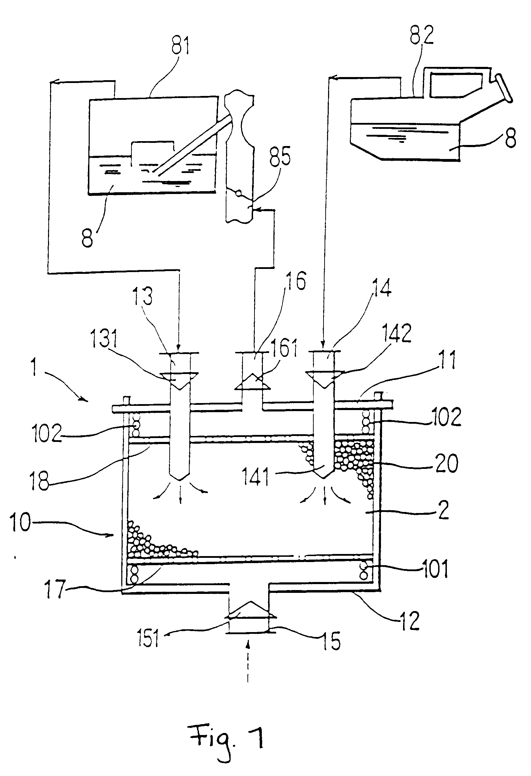

Fig. 1 is a schematic illustration showing an automobile canister employing a fuel absorbent described in embodiment 2, the specific components of which are described in further detail by way of the detailed description of the invention.

In the present invention, the swelling and insoluble rates of toluene indicate the ability of trapping evaporated fuel, the durability against the repetition of absorption-desorption cycles, respectively. The larger these values become, the more their capabilities are enhanced. One skilled in the art will realize that these rates are index values indicating the crosslinking density of the polymer, which have been conventionally used in the measurement of polymer rubber. The measurement method presently used is described in embodiment 1.

Examples of polymer crosslinked as above include: ethylene-propylene-diene polymer, ethylene-vinyl acetate copolymer, ethylene-propylene polymer, acrylic polymer, silicon polymer (e.g., methyl silicon, vinyl-methyl silicon, phenyl-methyl silicon), chlorosulfonic polyethylene polymer, chlorinated polyethylene polymer, epichlorohydrin polymer (e.g., epichlorohydrin-ethylene oxide), urethane polymer, oxypropylene polymer, oxytetra methylene glycol polymer, olefin glycol polymer, ε-caprolactam polymer, norbornene polymer, styrene polymer, isoprene polymer, chloroprene polymer, and butadiene polymer.

In an application where heat resistance is important, it is preferable to use the polymer which has a high heat resistance, such as ethylene-vinyl acetate copolymer, acrylic polymer, silicon polymer, and the blend polymer in combination thereof (e.g., EVA/acrylic type). It is preferable to add a heat stabilizer.

Crosslinking in the absence of solvent, according to the present invention, is detailed below in embodiment 1. In the present invention, EPDM polymer (ethylene-propylene-diene ternary copolymer) as a polymer material is dissolved in a solvent. A crosslinking agent, e.g., peroxide, is added and dissolved in the solvent at room temperature. The resulting solvent is filled in a plate-like vessel having a wide open area on its top, e.g., a vat made of a stainless steel, to be vaporized. The condition of "no solvent", is thereby achieved. The uncrosslinked sheet, in "no solvent" thus obtained, is heated, for example, to 70°C, for crosslinking to obtain a sheet of crosslinked reactant.

One skilled in the art will realize that the term "no solvent" is used herein to indicate a condition wherein the mixture is substantially free of solvent. Similarly, indications of the absence of solvent made herein is used to signify a mixture which is substantially free of solvent. A minor amount of solvent may be left without diminishing the properties of the present invention.

According to another method, toluene solution of an isocyanate type crosslinking agent is admixed to acid denaturized EPM (maleic anhydride graft ethylene propylene copolymer). The resulting admixture is fed to an extruder to be plasticized and uniformly mixed to obtain an uncrosslinked pellet. The uncrosslinked pellet is pressed at high temperature (e.g., 150°C) to be crosslinked under pressure and heat to obtain a sheet of fuel absorbent.

Examples of the crosslinking agent include percarbonate agent such as bis-(t-butyl-cyclohexyl)-peroxide dicarbonate, peroxide agent such as benzoyl peroxide, amino compound, isocyanate compound, sulfur, and sulfur compounds.

The crosslinking agent is used in an amount of 0.1 - 10 parts per 100 parts of polymer (before crosslinking).

The fuel absorbent may be shaped into powder, particle, sheet, fiber, or saturation forms. In order to have a powder or a particle form, the above obtained polymer fuel absorbent is crushed or cut. It may be obtained through heating the above-described uncrosslinked pellet. The sheet form is obtained by the aforementioned method. The fiber form is obtained by further extending the uncrosslinked admixture processed through the extruder to be a fiber with fine radius. It is, then, heated to be crosslinked. The saturation form is obtained by submerging a base material such as a fiber, thread, non-woven fabric, and gauze into the above admixture of the polymer material, solvent, and crosslinking agent. The base material, then, is taken out of the admixture to be dried and heated for crosslinking the polymer material adhered to the base material.

When using peroxides as the crosslinking agent for producing the uncrosslinked pellet by means of the extruder, it is preferable to use a peroxide (e.g. benzoyl peroxide) which has a critical temperature of 45°C or higher.

In case of using the peroxide with its critical temperature lower than 45°C, it will be crosslinked within the extruder to a large degree, which prevents the secondary processing. When selecting isocyanate or amino compounds as a crosslinking agent, care should be taken to select the temperature so as not to cause a large degree of crosslinking during pushing and mixing.

Preferably the polymer has its toluene swelling rate of 1000 wt% or higher and insoluble rate of 80 % or higher, thereby increasing the fuel absorbing capacity. The polymer is substantially composed of saturated bonded molecular chains, and preferably contains functional group that forms the crosslinking point in the chain or side chain by 0.001 mol or 0.5 mol per 100 g of the polymer. In such case where the contained component is less than 0.001 mol, the crosslinking degree is low, resulting in decreased insoluble rate of toluene. In such a case that it exceeds 0.5 mol, the crosslinking degree becomes unnecessarily high, resulting in decreased swelling rate.

The fuel absorbent of the present invention is formed of the crosslinked polymer in "no solvent", and has specific swelling and insoluble rates of toluene. Contrary to the conventional case where crosslinking occurs in a large amount of solvent, the fuel absorbent in the present invention contains no solvent therein, that has been used during crosslinking. That is, no solvent resides in the fuel absorbent. Accordingly, it has sufficient number of voids by which the fuel is absorbed. Since there is no solvent present, the fuel absorption capacity

EP 0 517 257 B1

is increased over available systems which contain solvents.

The fuel absorbent of the present invention contains "no solvent" therein, which allows it to be easily shaped into a desired form such as powder, particle, sheet, fiber, and saturation type. This enables the fuel to have easy desorption at purging, resulting in excellent durability against absorption-desorption cycles.

The present invention, thus, provides a fuel absorbent having excellent fuel absorbing capacity and durability against absorption-desorption cycles, which can be easily shaped into a desired form.

The present invention will be further described with reference to the following non-limiting examples.

Examples

Embodiment 1

The fuel absorbent according to this embodiment of the present invention and comparative examples will be described referring to the following tables.

Those tables show the respective components of uncrosslinked polymer material (polymer) and the crosslinking agent, crosslinking condition in the absence of solvent, i.e., forming condition (temperature (°C) and period (Hr)), resulting toluene swelling rate and toluene insoluble rate of the fuel absorbent. The crosslinking agent is shown in an amount of part per 100 parts of the above polymer.

Tables 1 to 6 show the respective combination of different kinds of polymers and crosslinking agents.

| Table | Polymer | Crosslinking agent |
|---|---|---|
| 1 | EPDM | Peroxide |
| 2 | EVA | Peroxide |
| 3 | Acid denaturation EPR | Amine compound |
| 4 | Acid denaturation EPR | Isocyanate compound |
| 5 | AEM | Amine compound |
| 6 | EAR | Amine compound |
| 7 | EVA + AENB | Peroxide |

Polymers and crosslinking agents which may be used in the respective Tables are as follows.

Polymer:

EPDM (ethylene propylene diene ternary copolymer, manufactured by Japan Synthetic Rubber Co., EP 33, containing propylene by 43 wt%, ENB (ethylidene norbornene) by 0.1 mol/100 g of polymer (Ratio of functional group forming the crosslinking point in the molecular chain or side chain to 100 g of the polymer), Mooney viscosity ($ML_{1+4}$, 100°C) = 45.

EVA (ethylene vinyl acetate rubber); manufactured by Bayer AG, LEVAPRENE 450, containing vinyl acetate by 45 wt%.

Acid denaturation EPR (Acid denaturation ethylene propylene rubber), manufactured by Japan Synthetic Rubber Co., Ltd., T7741P, maleic anhydride by 0.005 mol/100 g of polymer, Mooney viscosity = 82.

AEM (Acrylic rubber); manufactured by Nisshin Chemical Co., Ltd., RV-1020, containing epoxy radical by 0.02 mol/100 g of polymer, Mooney viscosity = 30.

EAR (Ethylene acrylic rubber) manufactured by DuPont-Showa Co., Ltd., VAMAC-G, Mooney viscosity = 16.

AENB (Acryl ethylidene norbornene rubber, manufactured by Japan Synthetic Rubber Co., AR 201, Mooney viscosity = 40.

Crosslinking agent:

Peroxide; bis-(t-butyl-cyclohexyl)-peroxide-dicarbonate manufactured by Kayaku Akzo Co., Ltd., Perkadox 16.

4

Amine compound; Alicyclic amine compound manufactured by Nagase Industries, NH-10, containing $NH_2$ by 45 g/l mol $NH_2$.

Isocyanate; Polymethylene polyphenyl polyisocyanate manufactured by Nihon Polyurethane Co., Ltd., MR-200, containing NCO 136 g/l mol NCO.

The fuel absorbent shown in Tables 1, 2, 3, 5 and 6 are obtained by heating the solvent cast film as described below.

The solution of 10 wt% was prepared by dissolving 1g of EPDM polymer in 9 g of toluene solvent. Then 0.04 g of peroxide in an amount of 4 parts per 100 parts of the polymer was dissolved in the above solvent at room temperature. The resulting solvent mixture was added to a stainless steel vat with dimensions of 15 x 17 cm and depth of 3 cm, over which, PTFE (polytetrafluoroethylene) film is spread. Toluene contained in the admixed solvent was vaporized at room temperature to achieve the condition of "no solvent". The admixture in the vat was, then, put into an air-heated circulation furnace controlled at 70°C for 3 hours to be heated and crosslinked; after which, a sheet of crosslinked material, 0.1 - 0.2 mm thick, was obtained. The fuel absorption capacity of this fuel absorbent was then measured.

The fuel absorbent shown in Table 4 was obtained by heating the polymer that had been plasticized and admixed, which will be described referring to example 36 of Table 4.

First, 1 kg of acid denaturation EPR and the solvent of 10 wt% obtained by dissolving 21 g of isocyanate type crosslinking agent in toluene solvent were prepared. The solvent mixed with the crosslinking agent was added to the polymer with stirring so as to be evenly mixed.

The resulting mixture was fed to the extruder at 100°C to be plasticized and further evenly mixed. At this point, it is important to balance the temperature and period of admixing so as not to cause crosslinking.

The admixture pushed out through the die of the extruder was cut into pieces with length of ca. 3 mm by means of a pelletizer. The piece obtained, a pellet, was pressed with a sheet press machine at 150°C and left for 1 hour under pressure and heated for crosslinking. After cooling, the sheet of crosslinked reactant, ca. 0.3 mm thick, was obtained. Then cutting the above produced sheet of crosslinked reactant of both examples and comparative examples, into pieces, each of which was 0.2 g in weight to be subjected to measurement of the fuel absorption capacity.

For measurement purposes, the fuel absorbent was put in a sample cell (weight: W) formed of 100 mesh stainless wire gauze, and weighed (sample weight: W1). It was submerged in toluene for 24 hours and taken out. The toluene adhered around the sample cell was wiped off and weighed (sample cell + sample weight: W2). It was dried by air for another 24 hours, and put into the air heating circulation furnace controlled at 100°C for 1 hour for completely drying. Its weight was weighed (sample cell + sample weight: W3).

Toluene swelling and insoluble rates are respectively obtained by using those values W, W1, W2 and W3 in the following equations:

$$\text{Toluene swelling rate (wt\%)} = [W2 - (W1 + W)] \times 100/W1$$

$$\text{Toluene insoluble rate (wt\%)} = (W3 - W) \times 100/W1$$

The results are shown in Tables.

Measurement results of examples and comparative examples in Tables 1 to 6 will be described.

Table 1 shows an example using EPDM as a polymer and peroxide as a crosslinking agent. Examples 1 to 3 at reaction temperature of 70°C show the swelling rate ranging from 820 to 1490 %, and insoluble rate ranging from 74 to 85 %, which are relatively high, i.e., excellent fuel absorbing capacity and durability against the absorption-desorption cycle. While comparative examples C1 and C2 use the same polymer and forming condition as those of the examples, a smaller amount of crosslinking agent is used. These comparative examples show the insoluble rate of 31.66 %, which is relatively low, resulting in decreased fuel absorption capacity. Examples 4 to 7 at reaction temperature of 100°C show high swelling rate ranging from 650 to 1180 %, and insoluble rate of 71 % or higher. The comparative examples C3 and C4, using too small and too large amounts of crosslinking agents, respectively, show relatively low toluene swelling rate.

Table 2 shows examples using EVA as a polymer, and peroxide as a crosslinking agent. Examples 11 to 15 of the present invention show the swelling rate ranging from 830 to 1190 % and the insoluble rate of 75 % and higher. While comparative examples C11, C12 and C13 using smaller amount of crosslinking agent show relatively high swelling rates. They show, however, low insoluble rates.

Table 3 shows examples using acid denaturation EPR as a polymer, and amine compound as a crosslinking agent. Examples 21 and 22 show higher swelling and insoluble rates than those of comparative examples C21 and C22. Examples 23, 24 and 25 show higher swelling rates than that of the comparative example C23. The comparative example C23 shows a relatively higher insoluble rate but its swelling rate is low.

Table 4 shows examples using acid denaturation EPR as a polymer and isocyanate as a crosslinking agent. Examples 31, 32 and 33 show high swelling and insoluble rates. Comparative example C31 shows high swelling rate, however, its insoluble rate is low. Examples 34, 35 and 36 show higher swelling and insoluble rates, while comparative example C32 shows a relatively low swelling rate.

Table 5 shows examples using AEM as a polymer and amine compound as a crosslinking agent. Examples 41 to 48 show higher swelling and insoluble rates than those of the comparative example C41.

Table 6 shows examples using EAR as a polymer, and amine compound as a crosslinking agent. Examples 51 to 54 show higher swelling and insoluble rates than those of the comparative example C54. Example 55 shows higher swelling rate than that of comparative examples C51, C52, C53 and C55.

Table 7 shows examples using mixture of EVA and AENB as a polymer, and peroxide as a crosslinking agent, the same as in Table 1. Examples 61, 62, 63 show toluene swelling rates ranging from 980 to 1450 %, and toluene insoluble rate of 77 % and higher, respectively. The comparative example C61 using smaller amount of crosslinking agent shows higher toluene swelling rate, however, its insoluble ratio is low.

As for heat resistance, swelling and insoluble rates of examples 61, 62 and 63 hardly changed after being heated at 150°C for 70 hours. On the contrary, the swelling rate of the comparative example C62 markedly decreased after being heated because EPDM has no heat resistance.

For the purpose of comparison, a fuel absorbent was produced according to the conventional method through reaction in solvent. In this process, EPDM (EP33) as a polymer was dissolved in a toluene solvent to be the solvent of 15 wt%. Then 20 parts of peroxide (P-16) as a crosslinking agent, per 100 parts of the polymer was added to the solvent to be reacted at 70°C for 3 hours. The obtained polymer was subjected to the measurement of its fuel absorbing capacity in the same way as the above examples. As a result, it showed a swelling rate of 400 %, and insoluble rate of 10 %, thus indicating low fuel absorbing capacity and durability against the fuel absorption-desorption cycles.

TABLE 1

|  |  | Examples | | | | | | | Comparative Examples | | | |
|---|---|---|---|---|---|---|---|---|---|---|---|---|
|  |  | 1 | 2 | 3 | 4 | 5 | 6 | 7 | C 1 | C 2 | C 3 | C 4 |
| Polymer | EPDM | 100 | 100 | 100 | 100 | 100 | 100 | 100 | 100 | 100 | 100 | 100 |
| | EVA | | | | | | | | | | | |
| | Denaturation EPR | | | | | | | | | | | |
| | AEM | | | | | | | | | | | |
| | EAR | | | | | | | | | | | |
| Crosslinking Agent | Peroxide | 4 | 6 | 8 | 1 | 4 | 6 | 8 | 0.5 | 1 | 0.5 | 10 |
| | Amine | | | | | | | | | | | |
| | Isocyanate | | | | | | | | | | | |
| Conditions | Temperature (°C) | 70 | 70 | 70 | 100 | 100 | 100 | 100 | 70 | 70 | 100 | 100 |
| | Period(Hr) | 3 | 3 | 3 | 3 | 3 | 3 | 3 | 3 | 3 | 3 | 3 |
| Toluene Swelling Rate (wt%) | | 1490 | 1030 | 820 | 1180 | 1080 | 920 | 650 | 410 | 1200 | 350 | 450 |
| Toluene Insoluble Rate (wt%) | | 74 | 84 | 85 | 71 | 75 | 83 | 87 | 31 | 66 | 67 | 89 |

EP 0 517 257 B1

EP 0 517 257 B1

TABLE 2

| | | Examples | | | | | Comparative Examples | | |
|---|---|---|---|---|---|---|---|---|---|
| | | 11 | 12 | 13 | 14 | 15 | C 11 | C 12 | C 13 |
| Polymer | EPDM | | | | | | | | |
| | EVA | 100 | 100 | 100 | 100 | 100 | 100 | 100 | 100 |
| | Denaturation EPR | | | | | | | | |
| | AEM | | | | | | | | |
| | EAR | | | | | | | | |
| Crosslinking Agent | Peroxide | 6 | 8 | 4 | 6 | 8 | 2 | 4 | 2 |
| | Amine | | | | | | | | |
| | Isocyanate | | | | | | | | |
| Condi-tions | Temperature (°C) | 70 | 70 | 100 | 100 | 100 | 70 | 70 | 100 |
| | Period(Hr) | 3 | 3 | 3 | 3 | 3 | 3 | 3 | 3 |
| Toluene Swelling Rate (wt%) | | 1030 | 830 | 1080 | 920 | 1190 | 1200 | 1790 | 2050 |
| Toluene Insoluble Rate (wt%) | | 84 | 85 | 75 | 83 | 87 | 55 | 68 | 65 |

TABLE 3

| | | Examples | | | | | Comparative Examples | | |
|---|---|---|---|---|---|---|---|---|---|
| | | 21 | 22 | 23 | 24 | 25 | C21 | C22 | C23 |
| Polymer | EPDM | 100 | | | | | | | |
| | EVA | | | | | | | | |
| | Denaturation EPR | | 100 | 100 | 100 | 100 | 100 | 100 | 100 |
| | AEM | | | | | | | | |
| | EAR | | | | | | | | |
| Crosslinking Agent | Peroxide | 0.7 | | | | | | | |
| | Amine | | 0.9 | 0.2 | 0.5 | 0.7 | 0.2 | 0.5 | 0.9 |
| | Isocyanate | | | | | | | | |
| Conditions | Temperature (°C) | 100 | 100 | 150 | 150 | 150 | 100 | 100 | 150 |
| | Period (Hr) | 3 | 3 | 1 | 1 | 1 | 3 | 3 | 1 |
| Toluene Swelling Rate (wt%) | | 1980 | 1950 | 1280 | 1070 | 520 | 1040 | 1110 | 450 |
| Toluene Insoluble Rate (wt%) | | 85 | 88 | 84 | 80 | 89 | 55 | 69 | 92 |

## TABLE 4

| | | | Examples | | | | | | Comparative Examples | |
|---|---|---|---|---|---|---|---|---|---|---|
| | | | 31 | 32 | 33 | 34 | 35 | 36 | C31 | C32 |
| Polymer | EPDM | | | | | | | | | |
| | EVA | | | | | | | | | |
| | Denaturation EPR | | 100 | 100 | 100 | 100 | 100 | 100 | 100 | 100 |
| | AEM | | | | | | | | | |
| | EAR | | | | | | | | | |
| Crosslinking Agent | Peroxide | | | | | | | | | |
| | Amine | | | | | | | | | |
| | Isocyanate | | 1.4 | 2.1 | 2.7 | 0.7 | 1.4 | 2.1 | 0.7 | 2.7 |
| Conditions | Temperature (°C) | | 100 | 100 | 100 | 150 | 150 | 150 | 100 | 150 |
| | Period(Hr) | | 3 | 3 | 3 | 1 | 1 | 1 | 3 | 1 |
| Toluene Swelling Rate (wt%) | | | 700 | 670 | 560 | 590 | 600 | 510 | 1040 | 480 |
| Toluene Insoluble Rate (wt%) | | | 77 | 81 | 84 | 77 | 77 | 80 | 68 | 81 |

EP 0 517 257 B1

TABLE 5

| | | Examples | | | | | | | | Comparative Example |
|---|---|---|---|---|---|---|---|---|---|---|
| | | 41 | 42 | 43 | 44 | 45 | 46 | 47 | 48 | C41 |
| Polymer | EPDM | | | | | | | | | |
| | EVA | | | | | | | | | |
| | Denaturation EPR | | | | | | | | | |
| | AEM | 100 | 100 | 100 | 100 | 100 | 100 | 100 | 100 | 100 |
| | EAR | | | | | | | | | |
| Crosslinking Agent | Peroxide | | | | | | | | | |
| | Amine | 2.4 | 4.7 | 7.1 | 9.5 | 2.4 | 4.7 | 7.1 | 9.5 | 0.2 |
| | Isocyanate | | | | | | | | | |
| Conditions | Temperature (°C) | 100 | 100 | 100 | 100 | 150 | 150 | 150 | 150 | 150 |
| | Period(Hr) | 3 | 3 | 3 | 3 | 1 | 1 | 1 | 1 | 1 |
| Toluene Swelling Rate (wt%) | | 1260 | 1100 | 1100 | 950 | 1080 | 1170 | 1080 | 1340 | 930 |
| Toluene Insoluble Rate (wt%) | | 78 | 80 | 84 | 89 | 88 | 90 | 94 | 94 | 43 |

TABLE 6

| | | Examples | | | | | Comparative Examples | | | | |
|---|---|---|---|---|---|---|---|---|---|---|---|
| | | 51 | 52 | 53 | 54 | 55 | C 51 | C 52 | C 53 | C 54 | C 55 |
| Polymer | EPDM | | | | | | | | | | |
| | EVA | | | | | | | | | | |
| | Denaturation EPR | | | | | | | | | | |
| | AEM | | | | | | | | | | |
| | EAR | 100 | 100 | 100 | 100 | 100 | 100 | 100 | 100 | 100 | 100 |
| Crosslinking Agent | Peroxide | | | | | | | | | | |
| | Amine | 1.8 | 3.6 | 5.4 | 7.2 | 1.8 | 3.6 | 5.4 | 7.2 | | |
| | Isocyanate | | | | | | | | | 10.8 | 10.8 |
| Conditions | Temperature (°C) | 100 | 100 | 100 | 100 | 150 | 150 | 150 | 150 | 100 | 150 |
| | Period(Hr) | 3 | 3 | 3 | 3 | 1 | 1 | 1 | 1 | 3 | 1 |
| Toluene Swelling Rate (wt%) | | 1200 | 1630 | 1730 | 2060 | 650 | 460 | 440 | 420 | 370 | 420 |
| Toluene Insoluble Rate (wt%) | | 71 | 76 | 81 | 82 | 85 | 91 | 91 | 96 | 25 | 30 |

12

TABLE 7

| | | Examples | | | Comparative Examples | |
|---|---|---|---|---|---|---|
| | | 61 | 62 | 63 | C61 | C62 |
| Polymer | EVA | 50 | 50 | 50 | 50 | |
| | AENB | 50 | 50 | 50 | 50 | |
| | EPDM | | | | | 100 |
| Crosslinking Agent | Peroxide | 2 | 4 | 6 | 0.1 | 4 |
| Conditions | Temperature(°C) | 100 | 100 | 100 | 100 | 100 |
| | Period(Hr) | 3 | 3 | 3 | 3 | 3 |
| Initial Rates | Toluene Swelling rate (wt%) | 1450 | 1050 | 980 | 1760 | 1080 |
| | Toluene Insoluble Rate (wt%) | 79 | 86 | 90 | 54 | 75 |
| Heat Resistance (After heated at 150°C for 70Hrs) | Toluene Swelling Rate (wt%) | 1230 | 910 | 870 | — | 90 |
| | Toluene Insoluble Rate (wt%) | 77 | 84 | 87 | — | 70 |

## Embodiment 2:

In this embodiment, explanation will be given on an automobile canister to which the fuel absorbent according to the present invention was applied and Fig. 1.

A fuel absorbent 20 is placed in an absorption chamber 2 formed in the interior of the housing body 10 of a canister 1.

The housing body 10 is cylindrical, and is provided with a lid 11 at its upper end and with a bottom plate 12 at its lower end. The lid 11 is provided with a purging pipe 16, the first and second introduction pipes 13 and 14 having their ends 141 projected into the interior of the absorption chamber 2.

The first introduction pipe 13 is connected to the upper space of a carburetor float chamber 81, and the second introduction pipe 14 is connected to a fuel tank 82. The purging pipe 16 is connected to a purging port 85. The bottom plate 12 has an opening for a purging air pipe 15. The pipes 13, 14, 15 and 16 are fitted with valves 131, 142, 151 and 161, respectively.

A perforated plate 17 is positioned at the lower end of the absorption chamber 2, and another perforated plate 18 at the upper end of the chamber 2. The perforated plate 17 is pushed upwardly by a spring 101, and the perforated plate 18 is pushed downwardly by a spring 102. In the system shown in Fig. 1, gasoline 8 is used as fuel.

Gasoline vapor evaporated in the carburetor float chamber 81 or in the fuel tank 82 is trapped by the canister 1 as described below. It flows, via the first and second introduction pipes 13 and 14, into the absorption chamber 2, where it comes into contact with the fuel absorbent 20 and is absorbed. During the period of absorption, the valves 131 and 142 fitted at the introduction pipes 13 and 14 are open, and the valve 161 of the purging pipe 16 and the valve 151 of the purging air pipe 15 are closed.

In the course of absorption, the fuel absorbent 20 swells through trapping of gasoline vapor.

After having absorbed a large quantity of gasoline vapor, the absorbent can be regenerated. If desired, the absorbent, after being used for a long period of time with repeated regeneration, can be replaced with a fresh one by detaching the lid 11 from the housing body 10.

Regeneration of the absorbent can be performed by introducing air through the purging air pipe 15, with valves 131, 142, 151 and 161 reversed. The exhaust gas is discharged into the purging port 85 via the purging pipe 16. During the purging step, the air introduced into the canister 1 plays an important role in the releasing and discharging of gasoline vapor absorbed by the fuel absorbent.

As described hereinabove, the fuel absorbent is capable of trapping evaporated fuel vapor, such as gasoline, in a quite efficient manner and can be used repeatedly with repetition of the absorption-desorption cycle.

## Claims

1.  A fuel absorbent which is a polymer crosslinked in the absence of a solvent having a final toluene swelling rate of at least 500 wt%, and a final toluene insoluble rate of at least 70 wt%.

2.  The fuel absorbent as claimed in claim 1, wherein said toluene swelling rate is at least 1000 wt% and said toluene insoluble rate is at least 80 wt%.

3.  The fuel absorbent as claimed in claim 1 or 2, wherein said polymer is composed of saturated bonded molecular chain and contains functional groups, forming a crosslinking point in said molecular chain or side chain by 0.001 to 0.5 mol per 100 g of said polymer.

4.  The fuel absorbent as claimed in claim 1, wherein said crosslinked polymer is selected from the group consisting of: ethylene-propylene-diene polymer, ethylene-vinyl acetate copolymer, ethylene-propylene polymer, acrylic polymer, silicon polymer, chlorosulfonic polyethylene polymer, chlorinated polyethylene polymer, epichlorohydrin polymer, urethane polymer, oxypropylene polymer, oxytetra methylene glycol polymer, olefin glycol polymer, $\varepsilon$-caprolactam polymer, norbornene polymer, styrene polymer, isoprene polymer, chloroprene polymer, and butadiene polymer.

5.  The fuel absorbent as claimed in claim 4, wherein said silicon polymer is selected from the group consisting methyl silicon, vinyl-methyl silicon and phenyl-methyl silicon.

6.  The fuel absorbent as claimed in claim 4, wherein said epichlorohydrin polymer is epichlorohydrin-ethylene oxide.

7.  The fuel absorbent as claimed in any of claims 1 to 6, wherein said fuel absorbent has a powder, particle, sheet, or fiber form or is bound to a base material to provide a saturation form.

8.  A process for producing a fuel absorbent, which comprises the steps of:
    i) forming an admixture of a crosslinking agent, a polymer material and a solvent;
    ii) vaporizing the solvent from the admixture such that said solvent is substantially removed;
    iii) heating the polymer mixture remaining from step (ii) to crosslink the polymer.

9.  The process as claimed in claim 8, wherein the vaporizing of step (ii) is performed in a plate-like vessel with a wide open area on its top and said vaporizing is performed by heating.

10. The process as claimed in claim 8, wherein said solvent is vaporized from said admixture of said polymer material, crosslinking agent and solvent to plasticize the polymer material and to produce an uncrosslinked material which may be pressed and heated.

11. The process as claimed in claim 8, wherein said polymer material is selected from the group consisting of ethylene-propylene-diene ternary copolymer, ethylene acetate vinyl rubber, acid denaturation ethylene-propylene rubber, acrylic rubber and ethylene acrylic rubber.

## Patentansprüche

1. Treibstoff-Absorptionsmittel, welches ein Polymer ist, das in Abwesenheit eines Lösungsmittels vernetzt wird und einen Endwert des Quellungskoeffizienten in Toluol von wenigstens 500 Gew.-% und einen Endwert des in Toluol unlöslichen Mengenanteils von wenigstens 70 Gew.-% aufweist.

2. Treibstoff-Absorptionsmittel nach Anspruch 1, worin der Quellungskoeffizient in Toluol wenigstens 1000 Gew.-% beträgt und der in Toluol unlösliche Mengenanteil wenigstens 80 Gew.-% ist.

3. Treibstoff-Absorptionsmittel nach Anspruch 1 oder 2, worin das Polymer aus gesättigten, miteinander verbundenen Molekülketten aufgebaut ist und funktionelle Gruppen enthält, die einen Vernetzungspunkt in der Molekülkette oder Seitenkette in einer Menge von 0,001 bis 0,5 Mol pro 100 g des Polymers bilden.

4. Treibstoff-Absorptionsmittel nach Anspruch 1, worin das vernetzte Polymer gewählt ist aus der aus Ethylen-Propylen-Dien-Polymer, Ethylen-Vinylacetat-Copolymer, Ethylen-Propylen-Polymer, Acryl-Polymer, Silicon-Polymer, Chlorsulfonsäure-Polyethylen-Polymer, chloriertes Ethylen-Polymer, Epichlorhydrin-Polymer, Urethan-Polymer, Oxypropylen-Polymer, Oxytetramethylenglykol-Polymer, Olefinglykol-Polymer, ε-Caprolactam-Polymer, Norbornen-Polymer, Styrol-Polymer, Isopren-Polymer, ChloroprenPolymer und Butadien-Polymer bestehenden Gruppe.

5. Treibstoff-Absorptionsmittel nach Anspruch 4, worin das Silikon-Polymer gewählt ist aus der aus Methylsilicon, Vinyl-Methyl-Silicon und Phenyl-Methyl-Silicon bestehenden Gruppe.

6. Treibstoff-Absorptionsmittel nach Anspruch 4, worin das Epichlorhydrin-Polymer Epichlorhydrin-Ethylenoxid ist.

7. Treibstoff-Absorptionsmittel nach einem der Ansprüche 1 bis 6, worin das Treibstoff-Absorptionsmittel in Pulverform, Teilchenform, Blattform oder Faserform vorliegt oder an ein Grundmaterial unter Bereitstellung einer Sättigungsform gebunden ist.

8. Verfahren zur Herstellung eines Treibstoff-Absorptionsmittels, das die Schritte umfaßt, daß man
   (i) eine Mischung aus einem Vernetzungsmittel, einem Polymermaterial und einem Lösungsmittel bildet;
   (ii) das Lösungsmittel aus der Mischung in der Weise verdampft, daß das Lösungsmittel im wesentlichen entfernt ist; und
   (iii) die nach Schritt (ii) zurückbleibende Polymermischung unter Vernetzen des Polymers erhitzt.

9. Verfahren nach Anspruch 8, worin das Verdampfen gemäß Schritt (ii) in einem plattenartigen Gefäß mit einem weiten offenen Bereich an seinem oberen Ende durchgeführt wird und das Verdampfen unter Erwärmen durchgeführt wird.

10. Verfahren nach Anspruch 8, worin das Lösungsmittel aus der Mischung von Polymermaterial, Vernetzungsmittel und Lösungsmittel unter Weichmachen des Polymermaterials und unter Herstellung eines unvernetzten Materials verdampft wird, das verpreßt und erwärmt werden kann.

11. Verfahren nach Anspruch 8, worin das Polymermaterial gewählt ist aus der aus einem ternären Ethylen-Propylen-Dien-Copolymer, Ethylenacetat-Vinylkautschuk, Säure-denaturiertem Ethylen-Propylen-Kautschuk, Acrylkautschuk und Ethylen-Acryl-Kautschuk bestehenden Gruppe.

## Revendications

1. Adsorbant de carburant, qui est un polymère réticulé en l'absence d'un solvant ayant un taux de gonflement final dans le toluène d'au moins 500 % en poids, et un taux final de matière insoluble dans le toluène d'au moins 70 % en poids.

2. Adsorbant de carburant suivant la revendication 1, dans lequel le taux de gonflement dans le toluène est d'au moins 1000 % en poids et le taux de matière insoluble dans le toluène est d'au moins 80 % en poids.

3. Adsorbant de carburant suivant la revendication 1 ou 2, dans lequel le polymère est composé d'une chaîne moléculaire à liaison saturée et contient des groupes fonctionnels, formant un point de réticulation dans la chaîne moléculaire ou dans une chaîne latérale à raison de 0,001 à 0,5 mole par 100 g du polymère.

4. Adsorbant de carburant suivant la revendication 1, dans lequel le polymère réticulé est choisi parmi un polymère d'éthylène, de propylène et de diène, un copolymère d'éthylène et d'acétate de vinyle, un polymère d'éthylène et de propylène, un polymère acrylique et un polymère de silicone, un polymère de polyéthylène chlorosulfonique, un polymère de polyéthylène chloré, un polymère d'épichlorhydrine, un polymère d'uréthanne, un polymère d'oxypropylène, un polymère d'oxytétraméthylèneglycol, un polymère d'oléfineglycol, un polymère d'ε-caprolactame, un polymère de norbornène, un polymère de styrène, un polymère d'isoprène, un polymère de chloroprène et un polymère de butadiène.

5. Adsorbant de carburant suivant la revendication 4, dans lequel le polymère de silicone est choisi parmi le méthylsilicone, le vinylméthylsilicone et le phénylméthylsilicone.

6. Adsorbant de carburant suivant la revendication 4, dans lequel le polymère d'épichlorhydrine est un épichlorhydrine-oxyde d'éthylène.

7. Adsorbant de carburant suivant l'une quelconque des revendications 1 à 6, dans lequel l'adsorbant de carburant est sous la forme d'une poudre, de particules, d'une feuille ou d'une fibre, ou est liée à une matière de base pour obtenir une forme de saturation.

8. Procédé de préparation d'un adsorbant de carburant, qui comprend les stades de :
   i) formation d'un mélange d'un agent de réticulation, d'une matière polymère et d'un solvant;
   ii) évaporation du solvant du mélange de manière à éliminer sensiblement ce solvant;
   iii) chauffage du mélange polymère restant du stade ii) pour réticuler le polymère.

9. Procédé suivant la revendication 8, qui consiste à effectuer l'évaporation du stade ii) dans un récipient analogue à une assiette ayant une grande surface ouverte en son sommet et l'évaporation est effectuée par chauffage.

10. Procédé suivant la revendication 8, qui consiste à évaporer le solvant du mélange de la matière polymère de l'agent de réticulation et du solvant, pour plastifier la matière polymère et pour préparer une matière non réticulée, qui peut être pressée et chauffée.

11. Procédé suivant la revendication 8, dans lequel la matière polymère est choisie parmi un copolymère ternaire d'éthylène, de propylène et de diène, un caoutchouc d'éthylène et d'acétate de vinyle, un caoutchouc d'éthylène et de propylène dénaturé par un acide, un caoutchouc acrylique et un caoutchouc acrylique d'éthylène.

EP 0 517 257 B1

Fig. 1

17